# EUROPÄISCHE PATENTSCHRIFT

(11) **EP 0 900 727 B1**
(45) Veröffentlichungstag und Bekanntmachung des Hinweises auf die Patenterteilung: **03.12.2003**
(21) Anmeldenummer: 98116445.2
(22) Anmeldetag: 31.08.1998
(51) Int. Cl.: B64D 9/00

(54) **Schiebestück mit Sicherung**
Sliding element with safety plate
Elément coulissant avec plaque d'arrêt

(30) Priorität: 04.09.1997 DE 19738679
(43) Veröffentlichungstag der Anmeldung: 10.03.1999
(73) Patentinhaber: VS Guss AG, 42719 Solingen (DE)
(72) Erfinder: Nussbaum, Paul, 40724 Hilden (DE)
(74) Vertreter: Stachow, Ernst-Walther, Prof. Dr.

(56) Entgegenhaltungen:
- DE-U- 9 303 666
- US-A- 4 850 769
- US-A- 5 609 452

## Beschreibung

Die Erfindung betrifft ein Schiebestück mit Sicherung für Befestigungsschienen mit den Merkmalen des Oberbegriffs von Anspruch 1.

Derartige Schiebestücke werden insbesondere für Aircargo-Schienen eingesetzt, wobei als Angriffspunkte für Befestigungsmittel Ösen vorgesehen sind, so daß Verzurrungen von Frachtstücken an dem Schiebestück sicher befestigt werden können. Die Schiebestücke können dabei entlang der Befestigungsschiene in ihre Sollposition verschoben und mittels der Sicherung festgelegt werden, um das Frachtstück auf einer Transportpalette zu sichern.

Des weiteren kommen gattungsgemäße Schiebestücke auch als Verlängerungsbeschläge für Spanngurte zur Anwendung, wie sie beispielsweise in dem deutschen Gebrauchsmuster G 93 03 666 beschrieben sind.

Die US 4,850,769 und die US 5,609,452 beschreiben gattungsgemäße Schiebestücke, bei welchen in dem Schiebestück eine Durchtrittsöffnung zur Aufnahme einer Niederspannfeder für die Sicherung vorgesehen ist, wobei die Feder auf einen unterseitig angeordnetern Stift wirkt, welcher in der U-förmigen Sicherung gehaltert ist und welcher in einem Einschnitt des Schiebestückes bei niedergespannter Sicherung aufgenommen wird, der zu der Aufnahme für die Feder einseitig offen ausgeführt ist.

Oftmals ist aber eine zeitweilige Festlegung der Schiebestücke in der Befestigungsschiene nicht ausreichend und eine permanente Fixierung erforderlich, die einfach handhabbar sein muß und auch bei unbeabsichtigten mechanischen Einwirkungen eine stets sichere Festlegung des Schiebestückes gewährleistet, bis das Schiebestück bestimmungsgemäß zu verschieben ist, um die Verzurrung des Frachtstückes lösen zu können.

Weiterhin ist zu berücksichtigen, daß die Schiebestücke, insbesondere bei der Verwendung im Aircargo-Bereich, sehr hohen Belastungen ausgesetzt sind und beispielsweise die Anforderungen gemäß ISO 9788:1990 (E) erfüllen müssen. Die Schiebestücke werden daher für diesen Anwendungsbereich als Schmiede- oder Gußstücke gefertigt. Dadurch sind die fertigungstechnischen Möglichkeiten beschränkt, um eine einfache und kostengünstige permanente Sicherung für ein Schiebestück realisieren zu können.

Der Erfindung liegt daher die Aufgabe zugrunde, eine permanente Fixierung des Schiebestückes in der Befestigungsschiene zu ermöglichen, wobei die Sicherung insbesondere als Schmiede- oder Gußteil kostengünstig herzustellen ist.

Erfindungsgemäß wird diese Aufgabe durch ein Schiebestück mit den Merkmalen des Anspruchs 1 gelöst.

Dadurch, daß zur Führung des Arretierungselementes ein einseitig offener Einschnitt vorgesehen ist, der beispielsweise als Einkerbung ausgeführt ist, liegt eine Ausführungsform vor, die eine einfache und kostengünstige Herstellung der Sicherung insbesondere auch in Schmiede- oder Gußtechnik ermöglicht. Die Anordnung von Durchgangsöffnungen in der Sicherung zur Aufnahme des Arretierungselementes, die eine komplizierte und schwer herstellbare Gußform bedingen würde, wird so vermieden.

Unter einem einseitigen offenen Einschnitt im Sinne der vorliegenden Erfindung ist ein Einschnitt der Sicherung, des Schiebestückes oder der Befestigungsschiene zu verstehen, der in einer Richtung senkrecht zur Längserstreckung des Arretierungselementes in dem jeweiligen Führungsbereich des Bauteiles geöffent ist. Ist beispielsweise ein stiftartiges Arretierungselement vorgesehen, so kann die Öffnung des Einschnittes bei einem auf der Befestigungsschiene montierten Schiebestück auch beispielsweise auf der der Befestigungsschiene gegenüberliegenden Seite der Sicherung vorgesehen sein oder beispielsweise an dem bei der Arretierung korrespondierenden Bauteil in Richtung auf die Befestigungsschiene hin offen sein.

Ist zur Lösung der Sicherung diese beispielsweise in einer Richtung senkrecht zur Befestigungsschiene von dieser zu beabstanden, so kann in der Sicherung auch stufenförmiger, also nach oben hin, d.h. zu der der Befestigungsschiene abgewandten Seite, als auch gleichzeitig in horizontaler Richtung geöffneter Einschnitt vorgesehen sein, um eine Beabstandung der Sicherung von der Befestigungsschiene zu verhindern.

Der Einschnitt kann durch ein an die jeweilige Fertigungstechnik angepaßtes Verfahren eingebracht sein, also beispielsweise bereits in der Gußform vorgesehen sein oder nachträglich in das Bauteil eingeschliffen oder eingefräst sein.

Das Arretierungselement kann insbesondere als Sicherungstift bzw. Splint aber z.B. auch klammerartig ausgeführt sein.

Das Schiebestück weist im verriegelten Zustand eine fluchtend zu dem Einschnitt der Sicherung angeordnete Durchtrittsöffnung auf, durch die das Arretierungselement durchführbar ist.

Die Sicherung kann derart ausgebildet sein, daß sie das Schiebestück in einem Teilbereich kappenartig übergreift, wobei auf beiden den Seitenflächen des Schiebestückes gegenüberliegenden Flanken der Sicherung Einschnitte zur Führung des Arretierungsmittels angeordnet sind. Das Arretierungsmittel kann somit auf beiden Seiten des Schiebestückes in den Einschnitten der Sicherung geführt und gehaltert werden, wodurch eine sichere permanente Fixierung ermöglicht ist.

Vorteilhaft ist die Sicherung bezüglich einer Ebene senkrecht zur Längsachse des Schiebestückes spiegelsymmetrisch ausgeführt, so daß eine Montage der Sicherung auf dem Schiebestück orientierungsunabhängig erfolgen kann. So können beispielsweise sowohl an den dem vorderen als an den dem hinteren Ende einer kappenartigen, auf dem Schiebestück montierten Sicherung Einschnitte vorgesehen sein, so daß die Sicherung in zwei verschiedenen Orientierungen auf dem Schiebestück montiert werden kann.

Das Schiebestück weist eine Durchtrittsöffnung zur Aufnahme einer Feder auf, die die Sicherung gegenüber dem Schiebestück niederspannt. Nach einer Alternative ist in dem Schiebestück eine Durchtrittsöffnung zur Aufnahme des Arretierungselementes vorgesehen, die zu der die Feder aufnehmenden Durchtrittsöffnung hin geöffnet ist. Es ist somit lediglich erforderlich, eine einzige entsprechend ausgeformte Durchtrittsöffnung in dem Schiebestück einzubringen, um sowohl die Feder als auch das Arretierungselement aufnehmen zu können. Hierdurch wird die Herstellung des Schiebestückes beträchtlich vereinfacht.

Angrenzend an den das Arretierungselement aufnehmenden Bereich an dem Schiebestück und/oder an der Sicherung können seitliche Vorkragungen vorgesehen sein, die über das Arretierungselement zumindest teilweise vorstehen. Hierdurch ist eine unbeabsichtigte mechanische Einwirkung auf das Arretierungselement, die zu einer Lösung der Sicherung führen könnte, erschwert.

In einer vorteilhaften Ausführungsform sind an dem Fuß des Schiebestückes seitlich vorspringende Nasen vorgesehen, die in korrespondierende Ausnehmungen einer Befestigungsschiene, die ein C-Profil aufweist, einführbar und nach einer Verschiebung des Schiebestückes von Hinterschneidungen des C-Profils gehaltert sind, wobei die Sicherung in der Verriegelungsstellung in die Ausnehmungen des C-Profils eingreift. Die Ausnehmungen des C-Profils können beispielsweise als Kreissegmente ausgestaltet sein, wobei die Nasen des Schiebestückes sowie die der Befestigungsschiene zugewandte Seite der Sicherung im wesentlichen kreisförmig ausgeführt sind. Zur Erreichung einer hohen mechanischen Festigkeit ist das Schiebestück vorteilhafterweise als Schmiede- oder Gußstück ausgeführt.

Im folgenden ist die Erfindung in der Zeichnung beispielhaft veranschaulicht und anhand der Zeichnung näher beschrieben. Es zeigen:
- Fig. 1: ein Schiebestück in Seitenansicht (rechts) sowie einen Schnitt entlang der Linie A-A (links),
- Fig. 2: eine Sicherung in Frontansicht (rechts), in Seitenansicht (Mitte) sowie in Draufsicht (links),
- Fig. 3: ein Schiebestück mit montierter Sicherung in Seitenansicht,
- Fig. 4: eine Befestigungsschiene in perspektivischer Darstellung,

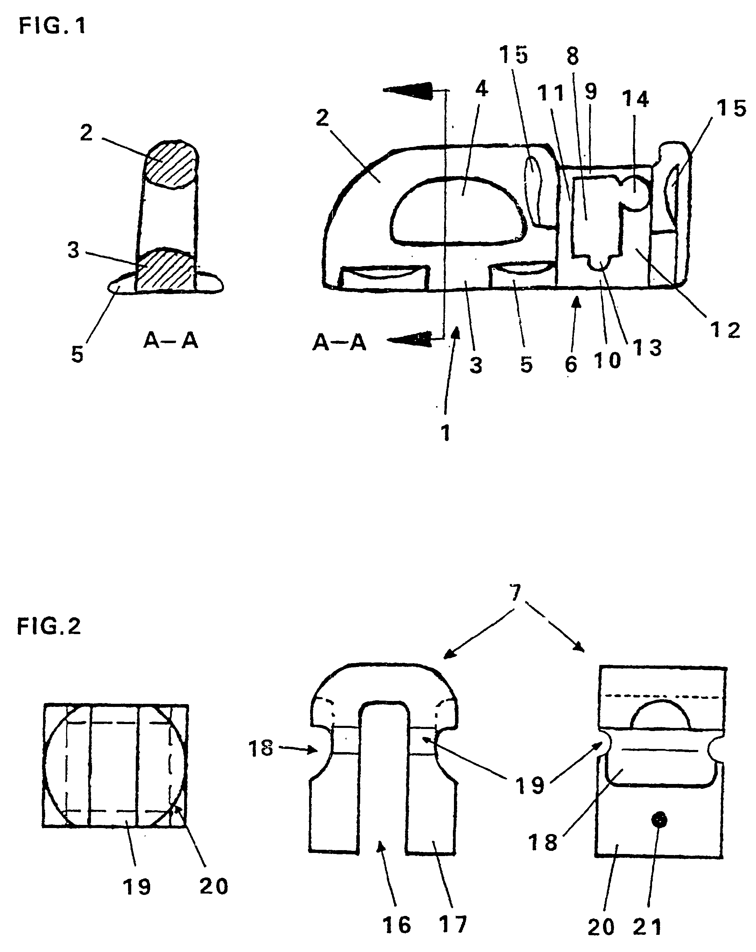

Das als Gußteil ausgeführte Schiebestück gemäß Fig. 1 besteht aus einem Bügel 2, der zusammen mit dem Fuß 3 des Schiebestückes 1 eine Öse 4 umschließt, die als Angriffspunkt für Befestigungsmittel, wie zum Beispiel Befestigungshaken von Verzurrungsgurten, dient. An dem Fuß 3 sind bündig mit dessen Unterseite abschließend Nasen 5 einstückig angeformt, die auf den gegenüberliegenden Seiten des Schiebestückes 1 sowie dem vorderen und hinteren Ende des Bügels 2 vorgesehen sind und eine Befestigung des Schiebestückes 1 in einer Befestigungsschiene ermöglichen. Die einander gegenüberliegenden Nasen 5 bilden zusammen mit der Unterseite des Fußes 3 im wesentlichen eine kreisförmige Fläche.

An dem hinteren Ende des Schiebestückes 1 ist eine Aufnahme 6 für den in Fig. 2 dargestellten Sicherungsbügel 7 vorgesehen. Die Aufnahme 6, die gegenüber dem Bügel 2 eine geringere Wandstärke aufweist, ist mit einer fensterartigen Durchtrittsöffnung 8 versehen, die der Aufnahme einer nicht dargestellten Zylinderfeder dient, mittels welcher der auf dem Schiebestück 1 montierte Sicherungsbügel 7 niedergespannt wird.

Die Durchtrittsöffnung 8 ist exzentrisch in der im wesentlichen rechteckig ausgebildeten Aufnahme 6 angeordnet. So weisen der obere Quersteg 9 sowie der vordere horizontale Steg 11 eine jeweils geringere Höhe auf als die gegenüberliegenden Stege 10 und 12. In dem Steg 10 ist eine Einbuchtung 13 eingeformt, die einen Stift des Sicherungsbügels 7 aufnehmen kann, der die in der Durchtrittsöffnung 8 angeordnete Feder unterstützt. Der Steg 12 weist einen Einschnitt 14 auf, der zu der Durchtrittsöffnung 8 hin geöffnet ist und der Aufnahme eines Arretierungsstiftes zur permanenten Fixierung der Sicherung dient. Dadurch, daß die Einbuchtung 13 sowie insbesondere der Einschnitt 14 mit der Durchtrittsöffnung 8 in Verbindung stehen und nicht beispielsweise als separate Durchtrittsöffnung ausgeführt sind, ist das Schiebestück insbesondere in Gußtechnik einfach herstellbar. Darüber hinaus wird durch die Anordnung des Einschnittes 14 anstelle einer separaten Durchtrittsöffnung die Längserstreckung der Aufnahme 6 auf ein Mindestmaß beschränkt und eine Verlängerung des Schiebestückes hierdurch vermieden.

Das Schiebestück 1 ist auf Höhe des Einschnittes 14 mit seitlichen Vorkragungen 15 versehen, die den auf dem Schiebestück montierten Sicherungsbügel seitlich abschirmen und einen unbeabsichtigten Angriff auf den Arretierungsstift 22 verhindern.

Gemäß Fig. 2 kann der Sicherungsbügel 7 kappenartig ausgeführt und mit einem Längsschlitz 16 versehen sein. Die Flanken 17 des Sicherungsbügels, die im montierten Zustand die Aufnahme 6 des Schiebestückes seitlich umfassen, weisen in ihrem oberen Bereich Einbuchtungen 18 auf, die ein manuelles Anheben des Sicherungsbügels entgegen einer Federkraft erleichtern.

Auf Höhe der Einbuchtungen 18 sind jeweils auf der Stirnseite sowie der Rückseite beider Flanken 17 des Sicherungsbügels einseitig offene Einschnitte 19 eingeformt, die der Durchführung eines Arretierungsstifes dienen. Der Arretierungsstift kann somit den Querschnitt des Sicherungsbügels vollständig übergreifen.

Des weiteren kann durch vorderseitige als auch rückseitige Anordnung der Einschnitte 19 am Sicherungsbügel 7 dieser in zwei unterschiedlichen Orientierungen über die Aufnahme 6 des Schiebestückes 1 geschoben werden, wodurch sich die Montage des Sicherungsbügels vereinfacht. Die Einschnitte 19 können bei der Gußherstellung des Sicherungsbügels eingeformt oder nachträglich beispielsweise eingefräst werden.

Die Öffnungsrichtung der Einschnitte 19 kann auch anders gewählt werden, beispielsweise als nach oben hin, d. h. dem Fuß 20 entgegengerichteter Einschnitt oder als stufenförmiger Einschnitt, der sowohl zur Vorder- bzw. Rückseite des Sicherungsbügels als auch zu dessen Oberseite hin geöffnet ist.

Der Fuß 20 des Sicherungsbügels, der eine im wesentlichen kreisförmige Querschnittskontur aufweist, ist mit einem den Längsschlitz 16 überbrückenden Stift 21 versehen, der im montierten Zustand des Sicherungsbügels die in der Durchtrittsöffnung 8 des Schiebestückes 1 angeordnete Zylinderfeder unterstützt. Die Aufnahmeöffnungen im Fuß 20 für den Stift 21 können bei der Herstellung des Sicherungsbügels oder in einem nachfolgenden Bearbeitungsschritt eingeformt werden.

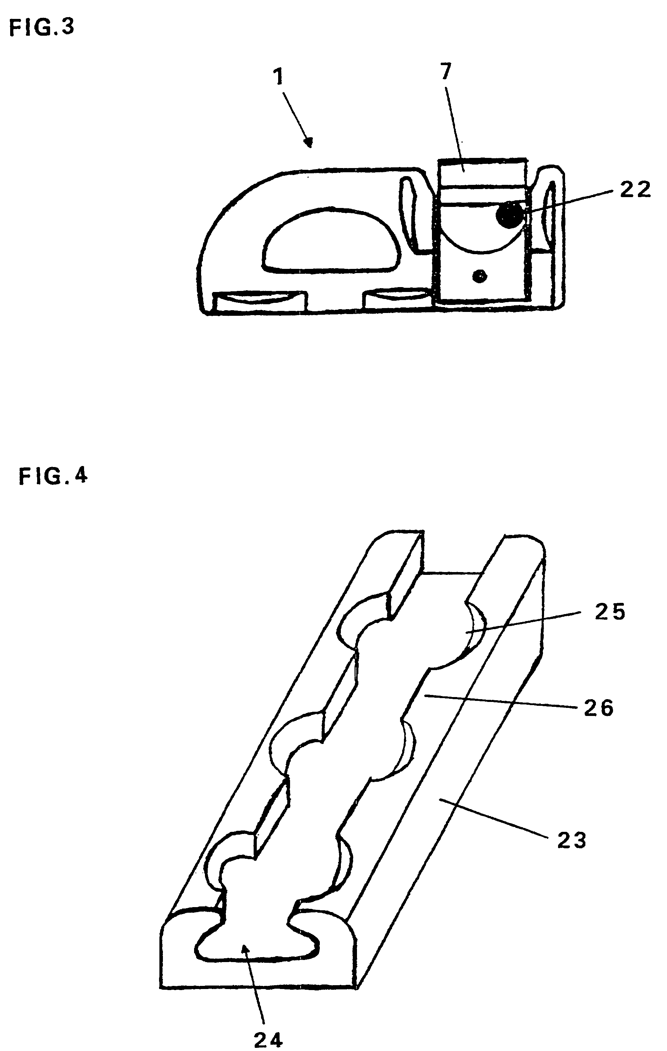

Wie aus Fig. 3 hervorgeht, kann der Sicherungsbügel 7 über die Aufnahme 6 des Schiebestückes geschoben werden, so daß der Arretierungsstift 22 durch die Einschnitte 19 des Sicherungsbügels 7 sowie den fluchtend zu diesen angeordneten Einschnitt 14 durchgeführt werden. Die Sicherung wird so in ihrer Verriegelungsstellung an dem Schiebestück festgelegt, wodurch dieses permanent in einer Befestigungsschiene fixiert werden kann.

Eine Befestigungsschiene zur Aufnahme des oben beschriebenen Schiebestückes ist in Fig. 4 gezeigt. Die Befestigungsschiene 23 weist ein C-Profil auf, in dessen Nut 24 das Schiebestück 1 seitlich eingeschoben oder von oben eingesteckt werden kann. Die Füße 3 des Schiebestückes können dabei durch die kreissegmentförmigen Einbuchtungen 25 an der Oberseite der Befestigungsschiene 23 geführt werden, bis daß der Fuß 3 des Schiebestückes auf der Basis der Befestigungsschiene 23 aufsetzt. Der Sicherungsbügel 7 des Schiebestückes 1 wird hierbei von dem Steg 26 der Befestigungsschiene entgegen einer Federkraft relativ zu dem Schiebestück nach oben verschoben.

Bei Verschiebung des Schiebestückes 1 in der Befestigungsschiene 23 untergreifen dann die Füße 3 die Stege 26, und der Sicherungsbügel 7 rastet mit seinem zylinderförmigen Fuß 20 in die Einbuchtungen 25 ein. Der Arretierungsstift 23 kann dann durch die Einschnitte 19 des Sicherungsbügels 7 sowie den Einschnitt 14 des Schiebestückes 1 geführt und an diesem durch Deformation der Ende festgelegt werden. Das Schiebestück ist so permanent in der Befestigungsschiene festgelegt, bis daß der Arretierungsstift 22 entfernt wird.

Die Befestigungsschiene kann auch nach Fig. 4 der ISO 9788:1990 (E) oder in anderer geeigneter Weise ausgeführt sein.

### Bezugszeichenliste

- 1: Schiebestück
- 2: Bügel
- 3: Fuß
- 4: Öse
- 5: Nase
- 6: Aufnahme
- 7: Sicherungsbügel
- 8: Durchtrittsöffnung
- 9: Quersteg
- 10: Quersteg
- 11: Steg
- 12: Steg
- 13: Einbuchtung
- 14: Einschnitt
- 15: Vorkragung
- 16: Längsschnitt
- 17: Flanke
- 18: Einbuchtung
- 19: Einschnitt
- 20: Fuß
- 21: Stift
- 22: Arretierungsstift
- 23: Befestigungsschiene
- 24: Nut
- 25: Einbuchtung
- 26: Steg

## Patentansprüche

1. Schiebestück mit Sicherung für Befestigungsschienen, das in Längsrichtung der Befestigungsschiene verschiebbar ist, mit einem Angriffspunkt (4) für Befestigungsmittel und einer Sicherung (7), die das Schiebestück (1) in der Verriegelungsstellung gegenüber der Befestigungsschiene verschiebungssicher festlegt, wobei das Schiebestück (1) eine Durchtrittsöffnung (8) zur Aufnahme einer Feder aufweist, mittels derer die Sicherung (7) gegenüber dem Schiebestück (1) niederspannbar ist, **dadurch gekennzeichnet, dass** die Sicherung (7) ein Arretierungselement (22) aufweist, das an dem Schiebestück (1) oder der Befestigungsschiene angreifend die Sicherung (7) in ihrer verriegelnden Position permanent festlegt, dass das Arretierungselement (22) in einem in der Sicherung vorgesehenen Einschnitt (19) geführt ist, dass das Schiebestück (1) im gesicherten Zustand eine fluchtend zu dem Einschnitt (19) der Sicherung angeordnete Durchtrittsöffnung (14) aufweist, durch die das Arretierungselement (22) durchführbar ist, und dass die Durchtrittsöffnung (14) zur Aufnahme des Arretierungselementes (22) zu der die Feder aufnehmenden Durchtrittsöffnung (8) hin geöffnet ist und/oder dass der in der Sicherung (7) vorgesehene Einschnitt (19) zur Durchführung des Arretierungselementes zumindest einseitig offen ausgeführt ist.

2. Schiebestück nach Anspruch 1, **dadurch gekennzeichnet, dass** die Sicherung (7) das Schiebestück (1) in einem Teilbereich kappenartig übergreift und daß auf beiden das Schiebestück (1) umgreifenden Flanken (17) der Sicherung (7) Einschnitte (19) zur Führung des Arretierungsmittels (22) angeordnet sind.

3. Schiebestück nach einem der Ansprüche 1 oder 2, **dadurch gekennzeichnet, daß** die Sicherung bezüglich einer Ebene senkrecht zur Längsachse des Schiebestückes spiegelsymmetrisch ausgeführt ist.

4. Schiebestück nach einem der Ansprüche 1-3, **dadurch gekennzeichnet, daß** angrenzend an den das Arretierungselement (22) aufnehmenden Bereich an dem Schiebestück (1) und/oder an der Sicherung (7) seitliche Vorkragungen (15) vorgesehen sind.

5. Schiebestück nach einem der Ansprüche 1-4, **dadurch gekennzeichnet, daß** an dem Fuß (3) des Schiebestückes (1) seitlich vorspringende Nasen (5) vorgesehen sind, die in korrespondierende Ausnehmungen (25) einer Befestigungsschiene (23) mit C-Profil einführbar und nach Verschiebung des Schiebestückes (1) in seine Sollposition von Hinterschneidungen (26) des C-Profils gehaltert sind, und daß die Sicherung (1) in der Verriegelungsstellung in die Ausnehmungen (25) des C-Profils eingreift.

6. Schiebestück nach einem der Ansprüche 1-5, **dadurch gekennzeichnet, daß** das Schiebestück als Schmiede- oder Gußstück ausgeführt ist.

## Claims

1. Slide element with securing device for fastening rails, which is slidable in longitudinal direction of the fastening rail, with an engagement point (4) for fastening means and a securing device (7), which fixes the slide element (1) in the locking setting relative to the fastening rail to be secure against displacement, wherein the slide element (1) has a passage opening (8) for reception of a spring by means of which the securing device (7) can be tensioned relative to the slide element (1), **characterised in that** the securing device (7) comprises a locking element (22), which by engaging the slide element (1) or the fastening rail permanently fixes the securing device (7) in its locking position, that the locking element (22) is guided in an incision (19) provided in the securing device, that the slide element (1) in the secured state has a passage opening (14), which is arranged in alignment with the incision (19) of the securing device and through which the locking element (22) can be guided, and that the passage opening (14) for reception of the locking element (22) is open towards the passage opening (8) receiving the spring and/or that the incision (19), which is provided in the securing device (7), for guidance through of the locking element is formed to be open at least at one side.

2. Slide element according to claim 1, **characterised in that** the securing device (7) engages in cap-like manner over the slide element (1) in a part region and that incisions (19) for guiding the locking means (22) are arranged on both flanks (17), which engage over the slide member (1), of the securing device (7).

3. Slide element according to one of claims 1 and 2, **characterised in that** the securing device is formed to be mirror-symmetrical with respect to a plane perpendicular to the longitudinal axis of the slide element.

4. Slide element according to one of claims 1 to 3, **characterised in that** lateral projections (15) are provided to adjoin the region, which receives the locking element (22), at the slide element (1) and/or at the securing device (7).

5. Slide element according to one of claims 1 to 4, **characterised in that** provided at the foot (3) of the slide element (1) are laterally projecting lugs (5) which are introducible into corresponding recesses (25) of a fastening rail (23) with a C-shaped profile and after displacement of the slide element (1) into the intended position thereof are held by undercuts (26) of the C-shaped profile, and that the securing device (1) in the locking setting engages in the recesses (25) of the C-shaped profile.

6. Slide element according to one of claims 1 to 5, **characterised in that** the slide element is constructed as a forged or cast member.

## Revendications

1. Élément coulissant avec élément de sécurité pour des glissières de fixation, déplaçable dans la direction longitudinale de la glissière de fixation, avec un point d'action (4), pour des moyens de fixation, et un élément de sécurité (7), qui fixe de façon sûre en coulissement la pièce coulissante (1) à la position de verrouillage, par rapport à la glissière de fixation, la pièce coulissante (1) présentant une ouverture de passage (8) pour recevoir un ressort, au moyen duquel l'élément de sécurité (7) est susceptible d'être abaissé par rapport à la pièce coulissante (1), **caractérisé en ce que** l'élément de sécurité (7) présente un élément d'arrêt (22), fixant de façon permanente l'élément de sécurité (7) à sa position verrouillante, en agissant sur la pièce coulissante (1) ou sur la glissière de fixation, **en ce que** l'élément d'arrêt (22) est guidé dans une entaille (19) prévue dans l'élément de sécurité, **en ce que** la pièce coulissante (1) présente une ouverture de passage (14) qui, à l'état assuré, est disposée en alignement par rapport à l'entaille (19) de l'élément de sécurité, ouverture de passage au moyen de laquelle l'élément d'arrêt (22) est susceptible d'être guidé, et **en ce que** l'ouverture de passage (14), prévue pour recevoir l'élément d'arrêt (22), est ouverte en direction de l'ouverture de passage (8) recevant le ressort, et/ou **en ce que** l'entaille (19), prévue dans l'élément de sécurité (7), est ouverte au moins sur un côté, dans le but de permettre le passage à l'élément d'arrêt.

2. Élément coulissant selon la revendication 1, **caractérisé en ce que** l'élément de sécurité (7) entoure la pièce coulissante (1) en forme de capuchon, dans une zone partielle, et **en ce que** des entailles (19), devant assurer le guidage du moyen d'arrêt (22), sont disposées sur les deux flancs (17), entourant l'élément coulissant (1), de l'élément de sécurité (7) .

3. Élément coulissant selon l'une des revendications 1 ou 2, **caractérisé en ce que** l'élément de sécurité est réalisé selon une symétrie spéculaire par rapport à un plan perpendiculaire à l'axe longitudinal de l'élément coulissant.

4. Élément coulissant selon l'une des revendications 1 à 3, **caractérisé en ce que** des saillies (15) latérales sont prévues sur l'élément coulissant (1) et/ou l'élément de sécurité (7), en limite à la zone recevant l'élément d'arrêt (22).

5. Élément coulissant selon l'une des revendications 1 à 4, **caractérisé en ce que**, sur le pied (3) de l'élément coulissant (1), sont prévus des ergots (5) en saillie latéralement et susceptibles d'être introduits dans des évidements (25) correspondants d'une glissière de fixation (23) à profil en C, et maintenus, après déplacement de l'élément coulissant (1) à sa position de consigne, par des contre-dépouilles (26) du profil en C, et **en ce que**, à la position de verrouillage, l'élément de sécurité (7) s'engage dans les évidements (25) du profil en C.

6. Élément coulissant selon l'une des revendications 1 à 5, **caractérisé en ce que** l'élément coulissant est réalisé sous la forme de pièce forgée ou moulée.
